# FASCICULE DE BREVET EUROPEEN

(11) **EP 3 613 197 B1**
(45) Date de publication et mention de la délivrance du brevet: **16.04.2025**
(21) Numéro de dépôt: 18720338.5
(22) Date de dépôt: 17.04.2018
(51) Int. Cl.: H04L 9/40, H04W 12/084, H04L 67/52

(54) **PROCÉDÉS POUR LE PARTAGE DE DONNÉES DE LOCALISATION ENTRE UN DISPOSITIF SOURCE D'UN UTILISATEUR ET UN DISPOSITIF DESTINATAIRE D'UN TIERS, SERVEUR, DISPOSITIF DESTINATAIRE D'UN TIERS ET PROGRAMME D'ORDINATEUR CORRESPONDANTS**
VERFAHREN ZUM TEILEN VON POSITIONSDATEN ZWISCHEN EINER QUELLENVORRICHTUNG EINES BENUTZERS UND EINER ZIELVORRICHTUNG EINES DRITTEN, ENTSPRECHENDER SERVER, ZIELVORRICHTUNG EINES DRITTEN UND COMPUTERPROGRAMM
METHODS FOR SHARING LOCATION DATA BETWEEN A SOURCE DEVICE OF A USER AND A DESTINATION DEVICE OF A THIRD PARTY, CORRESPONDING SERVER, DESTINATION DEVICE OF A THIRD PARTY AND COMPUTER PROGRAM

(30) Priorité: 19.04.2017 FR 1753399
(43) Date de publication de la demande: 26.02.2020
(73) Titulaire: Orange, 92130 Issy-les-Moulineaux (FR)
(72) Inventeur: MERCADIE, Philippe, 92326 Châtillon Cedex (FR); ACCETTA, Giovanni Battista, 92326 Châtillon Cedex (FR); PINATEL, Boris, 92326 Châtillon Cedex (FR)
(86) Numéro de dépôt international: PCT/FR2018/050958
(87) Numéro de publication internationale: WO 2018/193201

(56) Documents cités:
- EP-A1- 2 621 205
- US-A1- 2009 094 351
- US-A1- 2009 094 351
- US-A1- 2010 325 194
- US-A1- 2016 309 300
- US-A1- 2016 309 300

## Description

### 1. Domaine de l'invention

Le domaine de l'invention est celui de la géolocalisation.

Plus précisément, la présente invention offre une solution pour le partage de données de localisation, permettant notamment à un dispositif destinataire d'un tiers, autorisé par un dispositif source d'un utilisateur, d'accéder aux données de localisation du dispositif source de l'utilisateur.

Par exemple, le dispositif source de l'utilisateur est une montre connectée, communiquant avec un dispositif destinataire d'un tiers de type smartphone mettant en œuvre une application dédiée au partage de données de localisation.

La présente invention trouve notamment des applications dans tous les domaines nécessitant la géolocalisation d'un individu, par exemple dans le domaine du sport.

### 2. Art antérieur

Dans le domaine du sport, il est connu d'utiliser des montres équipées d'un module de géolocalisation. De telles montres permettent ainsi de déterminer la position de l'utilisateur, le temps pour effectuer son parcours, et sont donc utilisées par les sportifs pour connaître, et éventuellement améliorer, leurs performances.

Un inconvénient de ces montres est qu'elles ne permettent pas le partage de position avec des tiers. Ainsi, lors d'un marathon par exemple, la famille du coureur ne peut pas suivre en temps réel la position du coureur.

Il existe donc un besoin pour une nouvelle solution pour le partage de données de localisation ne présentant pas cet inconvénient de l'art antérieur.

Le document US 2010/0325194 décrit un procédé pour partager de données de localisation d'un terminal d'un utilisateur avec un autre terminal d'un autre utilisateur.

### 3. Exposé de l'invention

Un objet de la présente invention est de proposer une solution pour le partage de données de localisation permettant à des tiers autorisés par l'utilisateur d'accéder aux données de localisation de l'utilisateur.

Un autre objet de la présente invention est de proposer une solution permettant à l'utilisateur d'autoriser temporairement les tiers à accéder à ses informations de géolocalisation.

Encore un autre objet de la présente invention est de proposer une solution permettant le stockage temporaire des données de localisation. Selon un premier aspect, il est proposé un procédé de gestion de partage de données de localisation selon la revendication 1.

Un tel procédé selon ce mode de réalisation, mis en œuvre dans un serveur distant du dispositif source de l'utilisateur et du dispositif destinataire du tiers, permet de gérer les autorisations d'accès aux données de localisation du dispositif source de l'utilisateur.

Par exemple, l'utilisateur du dispositif source de l'utilisateur peut sélectionner, dans ses contacts, ceux qu'il autorise à accéder à ses données de localisation. De la même façon, l'utilisateur du dispositif source de l'utilisateur peut sélectionner, dans ses contacts, ceux qu'il n'autorise pas, ou qu'il n'autorise plus, à accéder à ses données de localisation. Pour chacun des contacts sélectionnés, un premier identifiant du dispositif destinataire du tiers associé à ce contact, comme son numéro de téléphone, est transmis au serveur, qui peut ainsi gérer une table de correspondance entre un premier identifiant du dispositif source de l'utilisateur et le premier identifiant du dispositif destinataire du tiers associé à chaque contact sélectionné. Notamment, le serveur peut ajouter ou retirer de la table de correspondance le premier identifiant du dispositif destinataire du tiers, selon qu'il est autorisé ou non par l'utilisateur du dispositif source de l'utilisateur à accéder à ses données de localisation.

Le procédé selon ce mode de réalisation permet donc à l'utilisateur du dispositif source de l'utilisateur d'autoriser temporairement les utilisateurs des dispositifs destinataires à accéder à ses informations de géolocalisation.

Lorsque le dispositif destinataire du tiers souhaite avoir accès aux données de localisation du dispositif source de l'utilisateur, il envoie une requête en transmission de données de localisation du dispositif source de l'utilisateur au serveur, avec un deuxième identifiant du dispositif source de l'utilisateur, correspondant au premier identifiant du dispositif source de l'utilisateur, et un deuxième identifiant du dispositif destinataire du tiers. Si les premier identifiant et deuxième identifiant du dispositif destinataire du tiers correspondent (par exemple sont identiques ou sont corrélés), et donc que le premier identifiant du dispositif destinataire du tiers est associé au premier identifiant du dispositif source de l'utilisateur dans la table de correspondance, le serveur peut transmettre au dispositif destinataire du tiers les données de localisation du dispositif source de l'utilisateur.

Par exemple, les premier et deuxième identifiants du dispositif source de l'utilisateur sont un numéro de téléphone associé au dispositif source de l'utilisateur, et les premier et deuxième identifiants du dispositif destinataire du tiers sont un numéro de téléphone associé au dispositif destinataire du tiers. Selon un mode de réalisation particulier, le procédé de gestion comprend également la réception d'une durée de validité applicable aux données de localisation du dispositif source de l'utilisateur.

Une telle durée de validité permet notamment de définir un temps de stockage des données de localisation du dispositif source de l'utilisateur sur le serveur.

Par exemple, le procédé de gestion comprend :
- l'activation d'une temporisation présentant une valeur égale à la durée de validité,
- le stockage en mémoire des données de localisation du dispositif source de l'utilisateur destinées à être transmises au dispositif destinataire du tiers pendant la temporisation,
- la suppression des données de localisation stockées après expiration de la temporisation.

Selon cet exemple, les données de localisation du dispositif source de l'utilisateur peuvent être stockées temporairement sur le serveur, pendant un temps défini par la durée de validité, puis supprimées du serveur.

On assure de cette façon que les données de localisation du dispositif source de l'utilisateur ne sont pas conservées, puis exploitées à des fins non envisagées ou non autorisées. En d'autres termes, aucun historique des données de localisation n'est conservé.

Selon un autre aspect, il est proposé un serveur de gestion de partage de données de localisation selon la revendication 4.

Un tel serveur est notamment adapté pour la mise en œuvre du procédé de gestion de partage de données de localisation décrit précédemment.

Ce serveur pourra bien sûr comporter les différentes caractéristiques relatives au procédé de gestion proposé, qui peuvent être combinées ou prises isolément. Ainsi, les caractéristiques et avantages de ce serveur sont les mêmes que ceux du procédé de gestion.

Un tel serveur est notamment adapté à échanger des données avec le dispositif source de l'utilisateur et le dispositif destinataire du tiers.

Par exemple, un tel serveur est géré par un opérateur de télécommunications, le processeur étant configuré pour communiquer avec les dispositifs source et destinataire par transmission/réception de données dans le réseau de l'opérateur.

Selon un deuxième aspect, il est proposé un procédé de partage de données de localisation selon la revendication 7.

Un tel procédé selon ce mode de réalisation permet également de gérer les autorisations d'accès aux données de localisation du dispositif source de l'utilisateur. En particulier, il permet de définir les dispositifs destinataires autorisés ou non à accéder aux données de localisation du dispositif source de l'utilisateur, et d'informer le serveur et les dispositifs destinataires en conséquence.

Un tel procédé de partage convient avantageusement bien pour l'échange de données avec un serveur distant mettant en œuvre le procédé de gestion de partage de données de localisation décrit précédemment.

Ce procédé de partage pourra bien-sûr comporter les différentes caractéristiques relatives au procédé de gestion proposé, qui peuvent être combinées ou prises isolément. Ainsi, les caractéristiques et avantages de ce procédé de partage sont les mêmes que ceux du procédé de gestion.

Selon un mode de réalisation particulier, le procédé de partage comprend également la transmission, au serveur distant, d'une durée de validité applicable aux données de localisation du dispositif source de l'utilisateur

Comme indiqué précédemment, une telle durée de validité permet notamment de définir un temps de stockage des données de localisation du dispositif source de l'utilisateur sur le serveur.

En particulier, la durée de validité peut être préalablement configurée et stockée dans une mémoire du dispositif source de l'utilisateur. Par exemple, une telle information peut être saisie par l'utilisateur du dispositif source de l'utilisateur, par l'intermédiaire d'une interface utilisateur.

Selon un mode de réalisation particulier, le message d'information d'accès (transmis du dispositif source de l'utilisateur vers le dispositif destinataire du tiers) comprend un lien dynamique, configuré pour ouvrir une application dédiée si celle-ci est installée sur le dispositif destinataire du tiers ou pour proposer au dispositif destinataire du tiers de télécharger l'application dédiée sinon.

La mise en œuvre du partage de données de localisation entre utilisateurs se trouve ainsi simplifiée.

Selon un mode de réalisation particulier, le message d'information d'accès et le message d'autorisation indiquent que le dispositif destinataire du tiers est autorisé à obtenir des données de localisation du dispositif source de l'utilisateur, ou, à l'inverse, que le dispositif destinataire du tiers n'est pas autorisé à obtenir des données de localisation du dispositif source de l'utilisateur.

Selon un autre aspect, il est proposé un système selon la revendication 8.

Le système comporte un dispositif source de l'utilisateur qui est notamment adapté pour la mise en œuvre du procédé de partage de données de localisation décrit précédemment.

Ce dispositif source de l'utilisateur pourra bien sûr comporter les différentes caractéristiques relatives au procédé de partage proposé, qui peuvent être combinées ou prises isolément. Ainsi, les caractéristiques et avantages de ce dispositif sont les mêmes que ceux du procédé de partage.

Par exemple, un tel dispositif est une montre, comprenant en outre :
- un module de géolocalisation,
- un module de communication.

Une telle montre dispose ainsi de moyens de communications, par exemple cellulaires, lui permettant de communiquer avec le serveur distant et avec des dispositifs destinataires.

Selon un troisième aspect, il est proposé un procédé d'accès à des données de localisation d'un dispositif source d'un utilisateur selon la revendication 5.

En particulier, le deuxième identifiant du dispositif source de l'utilisateur correspond au premier identifiant du dispositif source de l'utilisateur transmis par le dispositif source de l'utilisateur au serveur.

Un tel procédé selon ce mode de réalisation permet à un dispositif destinataire du tiers d'accéder aux données de localisation du dispositif source de l'utilisateur, s'il est autorisé.

En particulier, il permet d'envoyer des requêtes au serveur pour recevoir les données de localisation du dispositif source de l'utilisateur. Par exemple à chaque requête, ou périodiquement, le serveur vérifie si le dispositif destinataire du tiers est autorisé à accéder aux données de localisation du dispositif source de l'utilisateur. Si tel est le cas, le serveur lui transmet les données de localisation du dispositif source de l'utilisateur.

Ce procédé d'accès pourra bien-sûr comporter les différentes caractéristiques relatives aux procédés de gestion et de partage proposés, qui peuvent être combinées ou prises isolément. Ainsi, les caractéristiques et avantages de ce procédé d'accès sont les mêmes que ceux des procédés de gestion et de partage.

Selon un autre aspect, il est proposé un dispositif destinataire d'un tiers selon la revendication 6.

Un tel dispositif destinataire du tiers est notamment adapté pour la mise en œuvre du procédé d'accès à des données de localisation décrit précédemment.

Ce dispositif source de l'utilisateur pourra bien sûr comporter les différentes caractéristiques relatives au procédé d'accès proposé, qui peuvent être combinées ou prises isolément. Ainsi, les caractéristiques et avantages de ce dispositif sont les mêmes que ceux du procédé d'accès.

Par exemple, un tel dispositif est un équipement utilisateur tel qu'un ordinateur personnel, smartphone, tablette, etc., comprenant un module de communication configuré pour communiquer au moins avec le serveur distant.

Un tel dispositif dispose ainsi de moyens de communications, par exemple cellulaires, lui permettant de communiquer avec le serveur distant et avec le dispositif source de l'utilisateur.

Un autre aspect concerne un ou plusieurs programmes d'ordinateur comportant des instructions pour la mise en œuvre d'un procédé de gestion de partage de données de localisation et/ou d'un procédé de partage de données de localisation et/ou d'un procédé d'accès à des données de localisation tel(s) que décrit(s) ci-dessus lorsque ce ou ces programmes sont exécutés par au moins un processeur.

Selon encore un autre aspect, il est proposé un ou plusieurs supports d'enregistrement non transitoire lisibles par un ordinateur, et comportant des instructions d'un ou plusieurs programmes d'ordinateur comprenant des instructions pour la mise en œuvre d'un procédé de gestion de partage de données de localisation et/ou d'un procédé de partage de données de localisation et/ou d'un procédé d'accès à des données de localisation tel(s) que décrit(s) ci-dessus.

### 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- la figure 1 présente les différents dispositifs proposés pour le partage de données de localisation selon un mode de réalisation ;
- la figure 2 illustre les différents procédés proposés pour le partage de données de localisation selon un mode de réalisation ;
- les figures 3 à 5 illustrent respectivement la structure simplifiée d'un dispositif source de l'utilisateur, d'un dispositif destinataire du tiers et d'un serveur selon un mode de réalisation particulier pour la mise en œuvre des procédés proposés.

### 5. Description d'un mode de réalisation

La solution proposée permet à un utilisateur de partager sa position avec des tiers autorisés.

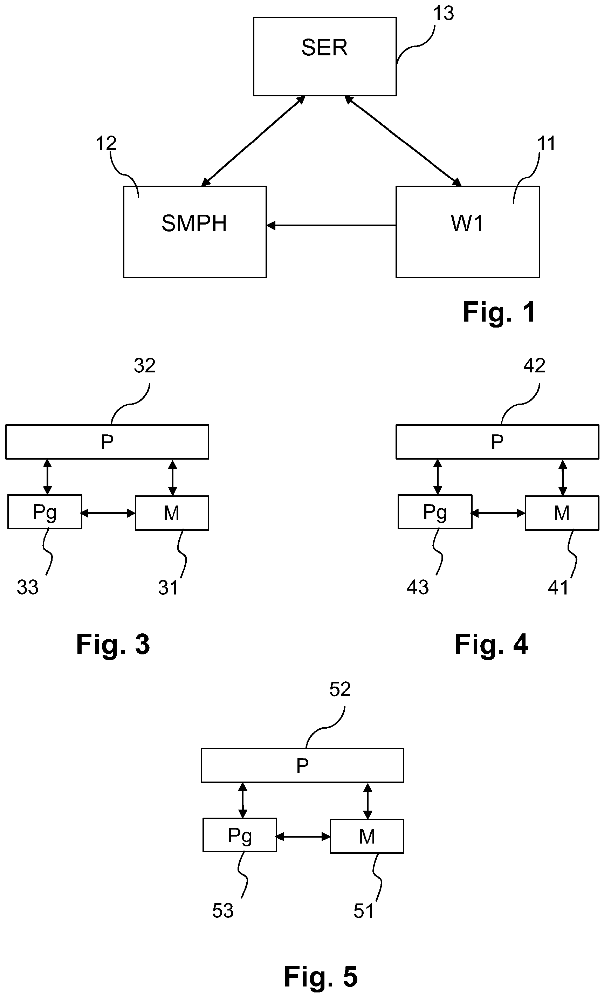

Selon un mode de réalisation particulier, le partage de données de localisation est mis en œuvre entre un dispositif source de l'utilisateur et un ou plusieurs dispositifs destinataires, par l'intermédiaire d'au moins un serveur distant. Comme illustré en figure 1, le dispositif source de l'utilisateur 11 souhaite partager ses données de localisation avec un ou plusieurs dispositifs destinataires 12, par l'intermédiaire d'un serveur distant 13.

Par exemple, le dispositif source de l'utilisateur 11 est une montre W1 d'un utilisateur A, le dispositif destinataire du tiers 12 est un smartphone SMPH d'un utilisateur B, et le serveur 13 est un serveur SER hébergé chez un opérateur de télécommunications et apte à communiquer avec d'autres nœuds de l'infrastructure de l'opérateur. La montre W1 comprend un module de communication pour communiquer avec le serveur SER par le biais d'une interface de programmation (API, « Applications Programming Interface »), notamment pour transmettre au serveur ses données de localisation. Le smartphone SMPH est adapté à mettre en œuvre une application dédiée au partage de données de localisation, encore appelée application compagnon. Le serveur SER est apte à communiquer avec l'application compagnon lorsqu'elle est exécutée sur le smartphone SMPH, par le biais d'une interface de programmation (API) spécifique à l'application compagnon. Le smartphone SMPH exécute ainsi une application compagnon de la montre W1, qui comprend une interface utilisateur capable d'afficher sur un écran des données de localisation de la montre W1 reçues du serveur SER.

De manière plus générale, le dispositif source de l'utilisateur comprend, entre autres, un module de géolocalisation, permettant notamment d'obtenir des données de localisation du dispositif source de l'utilisateur, un module de communication, par exemple de type cellulaire, permettant notamment de transmettre des données de localisation à un serveur et de transmettre un message d'information d'accès à un dispositif destinataire du tiers, une mémoire, permettant par exemple de stocker des identifiants des dispositifs destinataires (contacts de l'utilisateur du dispositif source de l'utilisateur), et un processeur. Le dispositif source de l'utilisateur peut notamment être équipé d'une unité d'identité d'abonné SIM (de l'anglais « Subscriber Identity Module ») (sous la forme d'une carte SIM, d'un module SIM adjoint au dispositif ou intégré à celui-ci (module eSIM, de l'anglais « *embedded SIM* »)), classiquement utilisée en téléphonie mobile pour stocker les informations spécifiques à l'abonné d'un réseau mobile, et donc être associé à un numéro de téléphone par le biais de l'unité SIM. Le module de géolocalisation reçoit par exemple des données de localisation du système de positionnement par satellite américain GPS (de l'anglais Global Positioning System) ou européen Galileo. Il peut également recevoir ou mettre à jour les données de localisation à partir d'un ou plusieurs capteurs, par exemple de type accéléromètre ou gyromètre.

Un tel dispositif source de l'utilisateur peut donc être une montre connectée, ou tout autre type de balise de géolocalisation connectée (balises pour animaux, modules de géolocalisation pour vélos, etc).

De la même façon, de manière plus générale, le dispositif destinataire du tiers comprend, entre autres, un module de communication, par exemple de type cellulaire, permettant notamment de recevoir des données de localisation d'un serveur et de recevoir un message d'information d'accès d'un dispositif source de l'utilisateur, une mémoire et un processeur. Le dispositif destinataire du tiers peut notamment être équipé d'une carte SIM. Il est notamment configuré pour exécuter l'application compagnon dédiée au partage de données de localisation.

Un tel dispositif destinataire du tiers peut donc être un smartphone, une tablette ou tout autre équipement connecté.

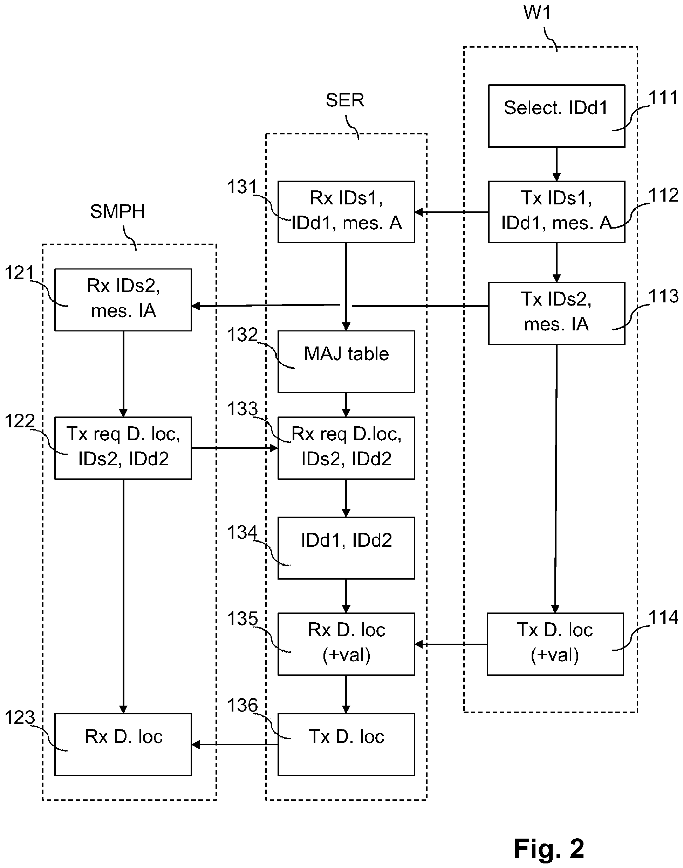

On décrit ci-après, en relation avec la figure 2, un exemple de mise en œuvre des procédés selon un ou plusieurs modes de réalisation. On considère par exemple que le procédé de partage de données de localisation est mis en œuvre dans un dispositif source de l'utilisateur de type montre W1, que le procédé de gestion de partage de données de localisation est mis en œuvre dans un serveur SER, et que le procédé d'accès aux données de localisation est mis en œuvre dans un dispositif destinataire du tiers de type smartphone SMPH, tels que décrits ci-dessus.

On considère par exemple une liste de contacts mémorisés dans une mémoire de la montre W1. A chaque contact (correspondant par exemple au nom d'une personne) est associé un premier identifiant (correspondant par exemple à un numéro de téléphone de cette personne), encore appelé premier identifiant du dispositif destinataire du tiers, ou premier identifiant d'abonné.

Un premier identifiant du dispositif destinataire du tiers IDd1 est sélectionné (111), parmi l'ensemble d'identifiants de dispositifs destinataires stockés dans la montre W1, correspondant par exemple au smartphone SMPH. Cette sélection peut être effectuée par l'utilisateur de la montre W1 à partir d'une interface utilisateur. En d'autres termes, l'utilisateur de la montre W1 sélectionne un contact dans la liste de contacts (ou de façon équivalente un premier identifiant du dispositif destinataire du tiers parmi l'ensemble d'identifiants de dispositifs destinataires) pour identifier une personne (ou de façon équivalente un dispositif destinataire du tiers) à qui l'utilisateur de la montre W1 souhaite ouvrir sa géolocalisation, c'est-à-dire avec qui l'utilisateur de la montre W1 souhaite partager ses données de localisation.

La montre W1 transmet (112), au serveur distant SER :
- un premier identifiant de la montre, encore appelé premier identifiant du dispositif source de l'utilisateur (IDs1), correspondant par exemple à un numéro de téléphone de l'utilisateur de la montre (tel que le numéro de téléphone associé à l'unité SIM de la montre W1 dans le cas où celle-ci intègre une unité SIM comme décrit ci-dessus),
- le premier identifiant du dispositif destinataire du tiers (IDd1) et
- un message d'autorisation (message A) indiquant si ce dispositif destinataire du tiers est autorisé à obtenir des données de localisation de la montre W1.

Selon un mode de réalisation particulier, le message d'autorisation porte le premier identifiant du dispositif source de l'utilisateur et/ou le premier identifiant du dispositif destinataire du tiers.

Le serveur SER reçoit (131) donc, du dispositif source de l'utilisateur, un premier identifiant du dispositif source de l'utilisateur (IDs1), le premier identifiant du dispositif destinataire du tiers (IDd1) et le message d'autorisation (message A).

A réception de ces informations, le serveur SER construit ou met à jour (132) une table de correspondance (de type LUT par exemple) associant le premier identifiant du dispositif source de l'utilisateur avec le premier identifiant du dispositif destinataire du tiers. Selon le contenu du message d'autorisation, le premier identifiant du dispositif destinataire du tiers peut être ajouté à la liste des dispositifs destinataires autorisés à recevoir des données de localisation de la montre W1, dans la table de correspondance, ou supprimé de la liste. En variante, le premier identifiant du dispositif destinataire du tiers peut être associé à un code dans la table de correspondance, indiquant s'il est autorisé ou non à recevoir des données de localisation de la montre W1. Par exemple, dans la table de correspondance ou dans une autre table, le premier identifiant du dispositif destinataire du tiers IDd1 est associé à une valeur '0' s'il n'est pas autorisé à recevoir des données de localisation de la montre W1, ou à une valeur '1' s'il est autorisé à recevoir des données de localisation.

Selon ce mode de réalisation, on peut ainsi déterminer, à partir d'une liste de contacts ou d'identifiants de dispositifs destinataires, les personnes (ou dispositifs destinataires) avec lesquelles l'utilisateur du dispositif source de l'utilisateur souhaite commencer à partager ses données de localisation, ou à l'inverse les personnes (ou dispositifs destinataires) avec lesquelles l'utilisateur du dispositif source de l'utilisateur ne souhaite plus partager ses données de localisation.

La montre W1 transmet également (113), au smartphone SMPH associé au premier identifiant du dispositif destinataire du tiers (IDd1) :
- un deuxième identifiant de la montre, encore appelé deuxième identifiant du dispositif source de l'utilisateur (IDs2), correspondant au premier identifiant du dispositif source de l'utilisateur (IDs1), soit par exemple un numéro de téléphone de l'utilisateur de la montre,
- un message d'information d'accès (message IA) informant le smartphone SMPH s'il est autorisé à obtenir des données de localisation de la montre W1.

Selon un mode de réalisation particulier, le message d'information d'accès porte le deuxième identifiant du dispositif source de l'utilisateur.

Le smartphone SMPH reçoit (121) donc, du dispositif source de l'utilisateur, un deuxième identifiant du dispositif source de l'utilisateur (IDs2) et le message d'information d'accès (message IA). Selon ce mode de réalisation, pour pouvoir accéder aux données de localisation de la montre W1, l'utilisateur du smartphone SMPH, ou de façon équivalente le premier identifiant du dispositif destinataire du tiers associé au smartphone SMPH, doit donc être dans la liste de contacts de l'utilisateur de la montre W1 stockée dans la montre W1, ou de façon équivalente dans les identifiants de dispositifs destinataires stockés dans la montre W1.

Par exemple, ce message d'information d'accès est transmis sous la forme d'un SMS, d'un email, etc. Un tel message d'information d'accès peut, selon un mode de réalisation particulier, porter en outre un lien dynamique, configuré pour ouvrir l'application compagnon dédiée si celle-ci est installée sur le dispositif destinataire du tiers, ou pour proposer au dispositif destinataire du tiers de télécharger l'application compagnon dédiée sinon.

En d'autres termes, selon cet exemple, le lien dynamique porté par le message d'information d'accès fonctionne comme suit :
- si l'application compagnon dédiée au partage de données de localisation n'est pas installée sur le dispositif destinataire du tiers de message d'information d'accès (smartphone SMPH), le lien le redirige vers une plateforme de distribution d'applications, et plus spécifiquement vers la page de l'application compagnon, pour qu'il la télécharge ;
- si l'application compagnon dédiée au partage de données de localisation est installée sur le dispositif destinataire du tiers de message d'information d'accès, le lien permet d'ouvrir directement l'application, à partir de laquelle il pourra recevoir et afficher les données de localisation du dispositif source de l'utilisateur qui sont partagées avec ce dispositif destinataire du tiers.

Selon un mode de réalisation particulier, comme la montre W1 a contacté directement le dispositif destinataire du tiers par l'envoi du message d'information d'accès, la montre W1 apparaît, dans l'interface utilisateur de l'application compagnon, dans la liste des dispositifs source « visibles », i.e. des dispositifs source pour lesquels le dispositif destinataire du tiers peut demander un accès aux données de localisation. L'application compagnon peut ainsi être mise à jour avec la montre W1.

A l'issue de ces opérations, on peut considérer que la montre W1 et le smartphone SMPH sont appairés.

Lorsque l'utilisateur du smartphone SMPH souhaite accéder aux données de localisation de la montre W1, il transmet (122) au serveur SER, à partir d'une interface utilisateur, une requête en transmission de données de localisation de la montre W1. Une telle requête émise par le smartphone SMPH comprend un identifiant du smartphone SMPH ou de l'application compagnon, dit deuxième identifiant du dispositif destinataire du tiers (IDd2). Par exemple, un tel identifiant est le numéro de téléphone du smartphone SMPH, le nom de l'utilisateur du smartphone SMPH, etc. Dans un ou plusieurs modes de réalisation, la requête émise par le smartphone SMPH comprend en outre un identifiant du dispositif source de l'utilisateur, dans l'exemple considéré un identifiant de la montre W1, dit deuxième identifiant du dispositif source de l'utilisateur (IDs2). Par exemple, un tel deuxième identifiant est l'identifiant de la montre W1 depuis lequel le smartphone SMPH a reçu le message d'information d'accès, par exemple un numéro de téléphone de la montre W1.

Le serveur SER reçoit (133) la requête en transmission de données de localisation de la montre W1 émise par le dispositif destinataire du tiers et comprenant le deuxième identifiant du dispositif destinataire du tiers ainsi que le deuxième identifiant du dispositif source de l'utilisateur.

Comme le deuxième identifiant du dispositif source de l'utilisateur correspond au premier identifiant du dispositif source de l'utilisateur utilisé pour construire ou mettre à jour la table de correspondance associant le premier identifiant du dispositif source de l'utilisateur avec le premier identifiant du dispositif destinataire du tiers, le serveur peut déterminer, en utilisant le deuxième identifiant du dispositif source de l'utilisateur et la table de correspondance, si les premier et deuxième identifiants du dispositif destinataire du tiers correspondent.

Par exemple, le serveur SER analyse (134), sur la base du deuxième identifiant du dispositif source de l'utilisateur, d'une part le premier identifiant du dispositif destinataire du tiers, stocké dans la table de correspondance si le dispositif destinataire du tiers est autorisé à recevoir des données de localisation du dispositif source de l'utilisateur ou associé à un code indiquant s'il est autorisé à recevoir des données de localisation du dispositif source de l'utilisateur, et d'autre part le deuxième identifiant du dispositif destinataire du tiers.

Si le premier identifiant du dispositif destinataire du tiers et le deuxième identifiant du dispositif destinataire du tiers correspondent, par exemple s'ils sont identiques, ou s'ils sont associés à la même personne, cela signifie que le dispositif destinataire du tiers, i.e. le smartphone SMPH, est autorisé à recevoir des données de localisation du dispositif source de l'utilisateur, i.e. de la montre W1.

La montre W1 peut donc transmettre (114) ses données de localisation au serveur SER, soit en continu, soit sur requête du serveur. Par exemple, une application embarquée dans la montre W1 récupère la position de la montre W1 en interrogeant un module de géolocalisation de la montre W1, puis transmet ces données au serveur SER pour que l'utilisateur de la montre W1 puisse partager temporairement sa géolocalisation avec le tiers utilisateur du smartphone SMPH. Dans un ou plusieurs modes de réalisation, la montre W1 peut être configurée pour transmettre au serveur SER ses données de localisation dès lors qu'elle a émis un message d'information d'accès autorisant l'accès à ses données de localisation à au moins un dispositif destinataire du tiers.

Selon un mode de réalisation particulier, les données de localisation sont envoyées vers le serveur SER avec une information de type durée de validité (val) des données de localisation. Par exemple, la montre W1 envoie un message au serveur SER comprenant les données de localisation de la montre W1 ainsi qu'une durée de validité de ces données.

Selon ce mode de réalisation particulier, la durée de validité est un paramètre qui peut être stocké dans la montre W1, et configuré par l'utilisateur de la montre W1. Par exemple, la durée de validité peut être choisie égale à une valeur entre une heure et une semaine.

Le serveur SER peut ainsi recevoir (135) les données de localisation de la montre W1, soit en continu, soit en réponse à une requête du serveur.

Eventuellement, selon le mode de réalisation particulier présenté ci-dessus, les données de localisation de la montre W1 peuvent être associées à une information de type durée de validité. Selon ce mode de réalisation particulier, sur réception des données de localisation de la montre W1, le serveur SER déclenche une temporisation dont la valeur est égale à la durée de validité reçue avec les données de localisation.

Le serveur SER peut ensuite transmettre (136) au smartphone SMPH les données de localisation de la montre W1, si les premier et deuxième identifiants du dispositif destinataire du tiers correspondent.

Le serveur SER consulte par exemple la table de correspondance associant un premier identifiant de la montre W1 avec le premier identifiant de chaque dispositif destinataire du tiers autorisé par l'utilisateur de la montre W1 à recevoir les données de localisation de la montre W1, et transmet ces données de localisation à ce(s) dispositif destinataire du tiers(s).

Selon le mode de réalisation particulier présenté ci-dessus, le serveur SER peut transmettre au smartphone SMPH les données de localisation de la montre W1 pendant la temporisation. Après l'expiration de la temporisation, correspondant à la fin de la durée de validité des données de localisation, le serveur SER efface ces données de localisation et n'en garde aucune trace. Il n'est donc plus possible de les transmettre au dispositif destinataire du tiers.

Le smartphone SMPH peut ainsi recevoir (123), de la part du serveur, les données de localisation de la montre W1, et l'utilisateur du smartphone SMPH peut visualiser la localisation, par exemple les coordonnées de géolocalisation, de la montre W1.

On a décrit en relation avec les figures 1 et 2, de façon simplifiée, la mise en œuvre des procédés proposés dans un dispositif source de l'utilisateur, un serveur, et un dispositif destinataire du tiers. Bien entendu, plusieurs dispositifs source, plusieurs serveurs, et/ou plusieurs dispositifs destinataires peuvent être mis en œuvre. Dans ce cas, les opérations décrites ci-dessus sont mises en œuvre pour chaque dispositif source de l'utilisateur, serveur, et/ou dispositif destinataire du tiers considéré.

Par exemple, si l'on considère plusieurs dispositifs source, le ou les serveurs gèrent une ou plusieurs tables de correspondance, associant, pour chaque dispositif source de l'utilisateur, un premier identifiant du dispositif source de l'utilisateur avec les premiers identifiants des dispositifs destinataires autorisés par le dispositif source de l'utilisateur considéré. Le ou les serveurs peuvent donc gérer une pluralité de dispositifs source et/ou une pluralité de dispositifs destinataires.

En fonction du mode de réalisation, l'identifiant du dispositif source de l'utilisateur transmis au serveur (premier identifiant du dispositif source de l'utilisateur) et au(x) dispositif(s) destinataire (deuxième identifiant du dispositif source de l'utilisateur) pourra prendre différentes formes, comme par exemple celle d'une adresse email ou d'un numéro de téléphone associés au dispositif source de l'utilisateur et/ou à son utilisateur.

Si un dispositif destinataire du tiers est autorisé à recevoir des données de localisation de plusieurs dispositifs source, il peut afficher, dans l'interface utilisateur de l'application compagnon, la liste des dispositifs source « visibles », i.e. des dispositifs source pour lesquels le dispositif destinataire du tiers peut demander un accès aux données de localisation.

Si l'on considère plusieurs dispositifs destinataires, le ou les serveurs transmettent, pour chaque dispositif source de l'utilisateur, les données de localisation du dispositif source de l'utilisateur considéré à l'application compagnon exécutée sur chaque dispositif destinataire du tiers autorisé par le dispositif source de l'utilisateur considéré.

Selon les modes de réalisation présentés ci-dessus, l'utilisateur du dispositif source de l'utilisateur peut donc choisir à qui il envoie ses données de localisation. Il peut notamment autoriser l'utilisateur d'un dispositif destinataire du tiers à accéder à ses données de localisation uniquement pour une période temporelle spécifique (par exemple, le temps d'une course). De plus, le dispositif source de l'utilisateur ne transmet pas par l'intermédiaire du serveur en permanence ses données de localisation aux dispositifs destinataires autorisés, mais uniquement sur requête d'un dispositif destinataire du tiers, après vérification par le serveur que le dispositif destinataire du tiers est toujours autorisé à recevoir les données de localisation du dispositif source de l'utilisateur.

On note que les opérations mentionnées ci-dessus peuvent être mises en œuvre dans un ordre différent. Par exemple, la transmission du message d'information d'accès I au smartphone SMPH peut être mise en œuvre avant la transmission au serveur du premier identifiant du dispositif destinataire du tiers et du message A. De même, la transmission des données de localisation de la montre W1 au serveur peut être mise en œuvre en continu, ou uniquement sur requête du serveur. La comparaison des premier identifiant du dispositif destinataire du tiers et deuxième identifiant du dispositif destinataire du tiers peut être mise en œuvre avant ou après la réception, par le serveur, des données de localisation.

On note, par ailleurs, qu'afin de sécuriser les échanges de données, les messages échangés entre le serveur et le dispositif destinataire du tiers (via l'application compagnon dédiée au partage de données de localisation) peuvent l'être selon le protocole de communication sécurisée HTTPS (pour HyperText Transfer Protocol Secure).

Dans le but de sécuriser les échanges de données entre le serveur et le dispositif destinataire du tiers, une phase d'enregistrement de l'application avec le serveur est mise en œuvre. L'utilisateur de l'application compagnon dédiée au partage de données de localisation crée un compte utilisateur auprès du serveur. Lors de cette création de compte, l'application transmet au serveur un identifiant du dispositif destinataire du tiers configuré pour exécuter l'application, encore appelé deuxième identifiant du dispositif destinataire du tiers, correspondant par exemple au numéro de téléphone de l'utilisateur du dispositif destinataire du tiers. Le serveur transmet en réponse un message à destination du dispositif destinataire du tiers (par exemple un message de type SMS, à destination du numéro de téléphone). Ce message comprend notamment un code d'authentification. Ce code d'authentification permet de vérifier que la personne qui utilise le dispositif destinataire du tiers est effectivement autorisée, car cette personne doit entrer le code d'authentification reçu dans l'application compagnon. Ensuite, tous les échanges entre le dispositif destinataire du tiers et le serveur, via l'application, se font en utilisant un en-tête d'authentification composé d'un jeton (« token ») comprenant le deuxième identifiant du dispositif destinataire du tiers et le code d'authentification reçu.

En phase de fonctionnement, l'application envoie des requêtes HTTPS de type « REST » au serveur, en utilisant le jeton. Notamment, l'application envoie au serveur une requête en transmission de données de localisation du dispositif source de l'utilisateur pour recevoir les données de localisation auxquelles elle peut accéder.

Sur réception d'une requête en transmission de données de localisation du dispositif source de l'utilisateur émise par l'application, le serveur extrait le deuxième identifiant du dispositif destinataire du tiers de la requête (par exemple, un numéro de téléphone), puis le compare aux premiers identifiants des dispositifs destinataires qu'il a reçus du dispositif source de l'utilisateur, stockés dans une table de correspondance. Si le deuxième identifiant du dispositif destinataire du tiers correspond à un premier identifiant du dispositif destinataire du tiers, le serveur vérifie dans la table de correspondance si ce dispositif destinataire du tiers est autorisé à accéder aux données de localisation du dispositif source de l'utilisateur. Autrement dit, le serveur regarde dans des tables de correspondance quels sont les dispositifs source pour lesquels le deuxième identifiant du dispositif destinataire du tiers (par exemple, un numéro de téléphone) a accès aux données de localisation. Le serveur effectue cette vérification sur la base du premier identifiant du dispositif destinataire du tiers (par exemple, un numéro de téléphone) qu'il a reçu du dispositif source de l'utilisateur.

Si le dispositif destinataire du tiers est autorisé à accéder aux données de localisation du dispositif source de l'utilisateur, le serveur transmet au dispositif destinataire du tiers les données de localisation.

On note qu'un protocole similaire peut également être mis en place pour sécuriser les échanges de données entre le serveur et le dispositif source de l'utilisateur.

En relation avec les figures 3 à 5 respectivement, on présente la structure d'un dispositif source de l'utilisateur, d'un dispositif destinataire du tiers et d'un serveur, selon un exemple de réalisation. Seuls les principaux éléments relatifs à la mise en œuvre de la technique proposée sont illustrés.

Comme illustré en figure 3, le dispositif source de l'utilisateur comprend une mémoire 31, une unité de traitement 32, équipée par exemple d'un processeur P, et pilotée par une application ou un programme d'ordinateur 33, configurés pour la mise en œuvre d'un ou plusieurs modes de réalisation du procédé de partage de données de localisation proposé.

A l'initialisation, les instructions de code du programme d'ordinateur 33 sont par exemple chargées dans une mémoire RAM avant d'être exécutées par le processeur de l'unité de traitement 32. Le processeur de l'unité de traitement 32 est configuré pour mettre en œuvre le procédé de partage de données de localisation selon au moins un mode de réalisation, selon les instructions du programme d'ordinateur 33, pour sélectionner un premier identifiant du dispositif destinataire du tiers, parmi un ensemble d'identifiants de dispositifs destinataires stockés dans le dispositif source de l'utilisateur, transmettre à un serveur distant un premier identifiant du dispositif source de l'utilisateur, le premier identifiant du dispositif destinataire du tiers et un message d'autorisation indiquant si ce dispositif destinataire du tiers est autorisé à obtenir des données de localisation du dispositif source de l'utilisateur, transmettre au dispositif destinataire du tiers un deuxième identifiant du dispositif source de l'utilisateur correspondant au premier identifiant du dispositif source de l'utilisateur et un message d'information d'accès l'informant s'il est autorisé à obtenir des données de localisation du dispositif source de l'utilisateur, et transmettre au serveur distant des données de localisation du dispositif source de l'utilisateur.

Le dispositif source de l'utilisateur peut être une montre, une balise de géolocalisation, un composant électronique, ou un autre appareil comportant un module de géolocalisation, un module de communication, et un processeur couplé de manière opérationnelle à une mémoire, ainsi que, selon le mode de réalisation choisi, d'autres éléments matériels associés comme une interface de réseau et un lecteur de support pour lire un support de stockage amovible et écrire sur un tel support (non représentés sur la figure). Le support de stockage amovible peut être, par exemple, un disque compact (CD), un disque vidéo/polyvalent numérique (DVD), un disque flash, une clé USB, etc. En fonction du mode de réalisation, la mémoire ou le support de stockage amovible contient des instructions qui, lorsqu'elles sont exécutées par l'unité de traitement 32, amènent cette unité de traitement 32 à sélectionner des dispositifs destinataires autorisés à recevoir des données de localisation et/ou échanger des données avec le serveur et/ou un dispositif destinataire du tiers selon au moins un mode de mise en œuvre du procédé de partage des données de localisation proposé.

En outre, le procédé de partage des données de localisation proposé peut être mis en œuvre sous forme logicielle, comme décrit ci-dessus, auquel cas il prend la forme d'un programme exécutable par un processeur, ou sous forme matérielle (ou « hardware »), comme un circuit intégré spécifique application (ASIC, *« Application-specific Integrated Circuit »*), un système sur puce (SOC, *« System On Chip »*), ou sous forme d'une combinaison d'éléments matériels et logiciels, comme par exemple un programme logiciel destiné à être chargé et exécuté sur un composant de type circuits logiques programmables (FPGA, « *Field Programmable Gate Array »*). Les SOC sont des systèmes embarqués qui intègrent tous les composants d'un système électronique dans une puce unique. Un *ASIC* est un circuit électronique spécialisé qui regroupe des fonctionnalités sur mesure pour une application donnée. Les ASIC sont généralement configurés lors de leur fabrication et ne peuvent être que simulés par l'utilisateur. Les *FPGA* sont des circuits électroniques reconfigurables par l'utilisateur.

Un procédé de partage des données de localisation tel que proposé peut également utiliser des architectures hybrides, comme par exemple des architectures basées sur un CPU+FPGA, un GPU (« *Graphics Processing Unit* ») ou un MPPA (« *Multi-Purpose Processor Array »*).

Comme illustré en figure 4, le dispositif destinataire du tiers comprend une mémoire 41, une unité de traitement 42, équipée par exemple d'un processeur P, et pilotée par une application, notamment l'application compagnon dédiée au partage de données de localisation, ou un programme d'ordinateur 43, configurés pour la mise en œuvre d'un ou plusieurs modes de réalisation du procédé d'accès aux données de localisation proposé.

A l'initialisation, les instructions de code du programme d'ordinateur 43 sont par exemple chargées dans une mémoire RAM avant d'être exécutées par le processeur de l'unité de traitement 42. Le processeur de l'unité de traitement 42 est configuré pour mettre en œuvre le procédé d'accès aux données de localisation selon au moins un mode de réalisation, selon les instructions du programme d'ordinateur 43, pour recevoir un deuxième identifiant du dispositif source de l'utilisateur et un message d'information d'accès informant le dispositif destinataire du tiers s'il est autorisé à obtenir des données de localisation du dispositif source de l'utilisateur, transmettre à un serveur distant une requête en transmission de données de localisation du dispositif source de l'utilisateur, la requête comprenant un deuxième identifiant du dispositif destinataire du tiers, et recevoir, du serveur, des données de localisation du dispositif source de l'utilisateur en réponse à la requête.

Le dispositif destinataire du tiers peut être téléphone portable, par exemple un smartphone, un ordinateur, un composant électronique, ou un autre appareil comportant un module de communication et un processeur couplé de manière opérationnelle à une mémoire, ainsi que, selon le mode de réalisation choisi, d'autres éléments matériels associés comme une interface de réseau et un lecteur de support pour lire un support de stockage amovible et écrire sur un tel support (non représentés sur la figure). Le support de stockage amovible peut être, par exemple, un disque compact (CD), un disque vidéo/polyvalent numérique (DVD), un disque flash, une clé USB, etc. En fonction du mode de réalisation, la mémoire ou le support de stockage amovible contient des instructions qui, lorsqu'elles sont exécutées par l'unité de traitement 42, amènent cette unité de traitement 42 à échanger des données avec le serveur et/ou le dispositif source de l'utilisateur selon au moins un mode de mise en œuvre du procédé d'accès aux données de localisation proposé.

En outre, le procédé d'accès aux données de localisation proposé peut être mis en œuvre sous forme logicielle, comme décrit ci-dessus, auquel cas il prend la forme d'un programme exécutable par un processeur, ou sous forme matérielle (ou « hardware »), comme un circuit intégré spécifique application (ASIC), un système sur puce (SOC), ou sous forme d'une combinaison d'éléments matériels et logiciels, comme par exemple un programme logiciel destiné à être chargé et exécuté sur un composant de type FPGA. Un procédé d'accès aux données de localisation tel que proposé peut également utiliser des architectures hybrides, comme par exemple des architectures basées sur un CPU+FPGA, un GPU ou un MPPA.

Comme illustré en figure 5, le serveur comprend une mémoire 51, une unité de traitement 52, équipée par exemple d'un processeur P, et pilotée par une application ou un programme d'ordinateur 53, configurés pour la mise en œuvre d'un ou plusieurs modes de réalisation du procédé de gestion de partage de données de localisation proposé.

A l'initialisation, les instructions de code du programme d'ordinateur 53 sont par exemple chargées dans une mémoire RAM avant d'être exécutées par le processeur de l'unité de traitement 52. Le processeur de l'unité de traitement 52 est configuré pour mettre en œuvre le procédé de gestion de partage de données de localisation selon au moins un mode de réalisation, selon les instructions du programme d'ordinateur 53, pour recevoir du dispositif source de l'utilisateur un premier identifiant du dispositif source de l'utilisateur, un premier identifiant du dispositif destinataire du tiers et un message d'autorisation indiquant si le dispositif destinataire du tiers est autorisé à obtenir des données de localisation du dispositif source de l'utilisateur, construire ou mettre à jour une table de correspondance associant le premier identifiant du dispositif source de l'utilisateur avec le premier identifiant du dispositif destinataire du tiers, recevoir des données de localisation du dispositif source de l'utilisateur, recevoir une requête en transmission de données de localisation du dispositif source de l'utilisateur, la requête comprenant un deuxième identifiant du dispositif source de l'utilisateur, correspondant au premier identifiant du dispositif source de l'utilisateur, et un deuxième identifiant du dispositif destinataire du tiers, déterminer, en utilisant le deuxième identifiant du dispositif source de l'utilisateur et la table de correspondance, si les premier et deuxième identifiants du dispositif destinataire du tiers correspondent, et transmettre au dispositif destinataire du tiers les données de localisation du dispositif source de l'utilisateur, en réponse à la requête, lorsque les premier et deuxième identifiants du dispositif destinataire du tiers correspondent.

Le serveur peut être un ordinateur ou un réseau d'ordinateurs, ou un autre appareil comportant un processeur couplé de manière opérationnelle à une mémoire, ainsi que, selon le mode de réalisation choisi, d'autres éléments matériels associés comme une interface de réseau et un lecteur de support pour lire un support de stockage amovible et écrire sur un tel support (non représentés sur la figure). Le support de stockage amovible peut être, par exemple, un disque compact (CD), un disque vidéo/polyvalent numérique (DVD), un disque flash, une clé USB, etc. En fonction du mode de réalisation, la mémoire ou le support de stockage amovible contient des instructions qui, lorsqu'elles sont exécutées par l'unité de traitement 52, amènent cette unité de traitement 52 à échanger des données avec le dispositif source de l'utilisateur et/ou le dispositif destinataire du tiers selon au moins un mode de mise en œuvre du procédé de gestion de partage de données de localisation proposé.

En outre, le procédé de gestion de partage de données de localisation proposé peut être mis en œuvre sous forme logicielle, comme décrit ci-dessus, auquel cas il prend la forme d'un programme exécutable par un processeur, ou sous forme matérielle (ou « hardware »), comme un circuit intégré spécifique application (ASIC), un système sur puce (SOC), ou sous forme d'une combinaison d'éléments matériels et logiciels, comme par exemple un programme logiciel destiné à être chargé et exécuté sur un composant de type FPGA. Un procédé de gestion de partage de données de localisation tel que proposé peut également utiliser des architectures hybrides, comme par exemple des architectures basées sur un CPU+FPGA, un GPU ou un MPPA.

En fonction du mode de réalisation choisi, certains actes, actions, évènements ou fonctions de chacun des procédés décrits dans le présent document peuvent être effectués ou se produire selon un ordre différent de celui dans lequel ils ont été décrits, ou peuvent être ajoutés, fusionnés ou bien ne pas être effectués ou ne pas se produire, selon le cas. En outre, dans certains modes de réalisation, certains actes, actions ou évènements sont effectués ou se produisent concurremment et non pas successivement.

## Revendications

1. Procédé de gestion de partage de données de localisation entre un dispositif source (11) d'un utilisateur et un dispositif destinataire (12) d'un tiers, ledit procédé étant mis en œuvre par un serveur distant dudit dispositif source (11) d'un utilisateur et dudit dispositif destinataire (12) d'un tiers, ledit procédé comprenant les étapes suivantes :
- recevoir (131), du dispositif source de l'utilisateur, un premier identifiant du dispositif source de l'utilisateur, un premier identifiant du dispositif destinataire du tiers, et un message d'autorisation indiquant si le dispositif destinataire du tiers est autorisé à obtenir des données de localisation du dispositif source de l'utilisateur,
- construire ou mettre à jour (132) une table de correspondance associant le premier identifiant du dispositif source de l'utilisateur avec le premier identifiant du dispositif destinataire du tiers,
- recevoir (135) des données de localisation du dispositif source de l'utilisateur,
- recevoir, en provenance d'une application compagnon dédiée au partage de données de localisation et exécutée par ledit dispositif destinataire (12) du tiers, un identifiant du dispositif destinataire du tiers, dit deuxième identifiant dudit dispositif destinataire du tiers, ledit deuxième identifiant dudit dispositif destinataire du tiers étant reçu lors de la création d'un compte utilisateur auprès dudit serveur par un utilisateur de l'application compagnon,
- transmettre, en réponse à ladite réception dudit deuxième identifiant du dispositif destinataire du tiers, un message à destination dudit dispositif destinataire du tiers, ledit message comprenant un code d'authentification,
- recevoir (133), du dispositif destinataire du tiers, une requête en transmission de données de localisation du dispositif source de l'utilisateur, la réception de la requête utilisant un jeton comprenant le deuxième identifiant du dispositif destinataire du tiers et ledit code d'authentification, ladite requête comprenant en outre un deuxième identifiant du dispositif source de l'utilisateur correspondant au premier identifiant du dispositif source de l'utilisateur,
- vérifier, en utilisant le code d'authentification, que ledit utilisateur dudit dispositif destinataire du tiers est autorisé,
- déterminer (134), en utilisant le deuxième identifiant du dispositif source de l'utilisateur et la table de correspondance, si les premier et deuxième identifiants du dispositif destinataire du tiers correspondent, et
- transmettre (136) au dispositif destinataire du tiers les données de localisation du dispositif source de l'utilisateur, en réponse à la requête, lorsque les premier et deuxième identifiants du dispositif destinataire du tiers correspondent.

2. Procédé de gestion selon la revendication 1, comprenant également recevoir une durée de validité applicable aux données de localisation du dispositif source de l'utilisateur.

3. Procédé de gestion selon la revendication 2, comprenant en outre :
- activer une temporisation présentant une valeur égale à la durée de validité,
- stocker en mémoire les données de localisation du dispositif source de l'utilisateur pendant la temporisation,
- supprimer les données de localisation stockées après expiration de la temporisation.

4. Serveur de gestion de partage de données de localisation entre un dispositif source d'un utilisateur et un dispositif destinataire d'un tiers, comprenant un processeur couplé de manière opérationnelle à une mémoire, et configuré pour mettre en œuvre un procédé de gestion de partage de données selon l'une quelconque des revendications 1 à 3.

5. Procédé d'accès à des données de localisation d'un dispositif source d'un utilisateur, ledit procédé étant mis en œuvre dans un dispositif destinataire d'un tiers, ledit procédé comprenant les étapes suivantes :
- recevoir (121), depuis le dispositif source de l'utilisateur, un identifiant du dispositif source de l'utilisateur, dit deuxième identifiant du dispositif source de l'utilisateur, et un message d'information d'accès informant le dispositif destinataire du tiers s'il est autorisé à obtenir des données de localisation du dispositif source de l'utilisateur,
- créer, par un utilisateur d'une application compagnon dédiée au partage de données de localisation et exécutée par ledit dispositif destinataire du tiers, un compte utilisateur auprès d'un serveur distant dudit dispositif source,
- transmettre, audit serveur distant, par l'application compagnon, lors de ladite création du compte utilisateur, un identifiant du dispositif destinataire du tiers, dit deuxième identifiant du dispositif destinataire du tiers,
- recevoir, en réponse à ladite transmission dudit deuxième identifiant du dispositif destinataire du tiers, en provenance dudit serveur distant, un message comprenant un code d'authentification,
- entrer, par l'utilisateur du dispositif destinataire du tiers, ledit code d'authentification dans ladite application compagnon,
- transmettre (122), audit serveur distant, une requête en transmission de données de localisation du dispositif source de l'utilisateur, la requête comprenant le deuxième identifiant du dispositif source de l'utilisateur et étant transmise en utilisant un jeton comprenant ledit deuxième identifiant du dispositif destinataire du tiers et ledit code d'authentification, et
- recevoir (123), en réponse à la requête en transmission de données de localisation du dispositif source de l'utilisateur, des données de localisation du dispositif source de l'utilisateur.

6. Dispositif destinataire d'un tiers configuré pour accéder à des données de localisation d'un dispositif source d'un utilisateur, comprenant un processeur couplé de manière opérationnelle à une mémoire, et configuré pour mettre en œuvre le procédé d'accès à des données de localisation d'un dispositif source de l'utilisateur selon la revendication 5.

7. Procédé comprenant les étapes du procédé de gestion de partage de données de localisation selon l'une des revendications 1 à 3, ledit procédé comprenant en outre les étapes du procédé d'accès à des données de localisation du dispositif source de l'utilisateur (11) selon la revendication 5, ledit procédé comprenant en outre les étapes suivantes mises en œuvre dans le dispositif source de l'utilisateur:
- sélectionner (111) le premier identifiant du dispositif destinataire du tiers, parmi un ensemble d'identifiants de dispositifs destinataires d'au moins un tiers stockés dans le dispositif source de l'utilisateur,
- transmettre (112), au serveur distant, le premier identifiant du dispositif source de l'utilisateur, le premier identifiant du dispositif destinataire du tiers et le message d'autorisation indiquant si le dispositif destinataire du tiers est autorisé à obtenir des données de localisation du dispositif source de l'utilisateur,
- transmettre (113), au dispositif destinataire du tiers, le deuxième identifiant du dispositif source de l'utilisateur correspondant au premier identifiant du dispositif source de l'utilisateur, et le message d'information d'accès l'informant s'il est autorisé à obtenir des données de localisation du dispositif source de l'utilisateur, et
- transmettre (114) au serveur distant les données de localisation du dispositif source de l'utilisateur.

8. Système comportant un dispositif source d'un utilisateur, un dispositif destinataire d'un tiers et un serveur distant, ledit système étant configuré pour mettre en œuvre le procédé selon la revendication 7.

9. Système selon la revendication 8, selon lequel le dispositif source est une montre, comprenant en outre :
- un module de géolocalisation,
- un module de communication.

10. Programme d'ordinateur comportant des instructions qui, lorsque le programme est exécuté par un processeur, conduisent ledit processeur à mettre en œuvre le procédé selon l'une quelconque des revendications 1 à 3, ou la revendication 5.

11. Support d'enregistrement non transitoire lisible par un ordinateur sur lequel est enregistré le programme d'ordinateur selon la revendication 10.

## Patentansprüche

1. Verfahren zur Verwaltung des Teilens von Positionsdaten zwischen einer Quellenvorrichtung (11) eines Benutzers und einer Zielvorrichtung (12) eines Dritten, wobei das Verfahren durch einen Server umgesetzt wird, der von der Quellenvorrichtung (11) eines Benutzers und der Zielvorrichtung (12) eines Dritten entfernt ist, wobei das Verfahren die folgenden Schritte beinhaltet:
- Empfangen (131), von der Quellenvorrichtung des Benutzers, einer ersten Kennung der Quellenvorrichtung des Benutzers, einer ersten Kennung der Zielvorrichtung des Dritten und einer Autorisierungsnachricht, die angibt, ob die Zielvorrichtung des Dritten autorisiert ist, Positionsdaten der Quellenvorrichtung des Benutzers zu erhalten,
- Erzeugen oder Aktualisieren (132) einer Entsprechungstabelle, die die erste Kennung der Quellenvorrichtung des Benutzers der ersten Kennung der Zielvorrichtung des Dritten zuordnet,
- Empfangen (135) von Positionsdaten von der Quellenvorrichtung des Benutzers,
- Empfangen, von einer Companion-App, die für das Teilen von Positionsdaten zuständig ist und durch die Zielvorrichtung (12) des Dritten ausgeführt wird, einer Kennung der Zielvorrichtung des Dritten, als zweite Kennung der Zielvorrichtung des Dritten bezeichnet, wobei die zweite Kennung der Zielvorrichtung des Dritten während der Erstellung eines Benutzerkontos bei dem Server durch einen Benutzer der Companion-App empfangen wird,
- Übertragen, als Reaktion auf das Empfangen der zweiten Kennung der Zielvorrichtung des Dritten, einer Nachricht an die Zielvorrichtung des Dritten, wobei die Nachricht einen Authentifizierungscode beinhaltet,
- Empfangen (133), von der Zielvorrichtung des Dritten, einer Anforderung zur Übertragung von Positionsdaten der Quellenvorrichtung des Benutzers, wobei das Empfangen der Anforderung einen Token verwendet, der die zweite Kennung der Zielvorrichtung des Dritten und den Authentifizierungscode beinhaltet, wobei die Anforderung ferner eine zweite Kennung der Quellenvorrichtung des Benutzers beinhaltet, die der ersten Kennung der Quellenvorrichtung des Benutzers entspricht,
- Prüfen, unter Verwendung des Authentifizierungscodes, dass der Benutzer der Zielvorrichtung des Dritten autorisiert ist,
- Bestimmen (134), unter Verwendung der zweiten Kennung der Quellenvorrichtung des Benutzers und der Entsprechungstabelle, ob die erste und die zweite Kennung der Zielvorrichtung des Dritten übereinstimmen, und
- Übertragen (136), an die Zielvorrichtung des Dritten, der Positionsdaten der Quellenvorrichtung des Benutzers als Reaktion auf die Anforderung, wenn die erste und die zweite Kennung der Zielvorrichtung des Dritten übereinstimmen.

2. Verwaltungsverfahren nach Anspruch 1, ferner beinhaltend das Empfangen einer Gültigkeitsdauer, die für die Positionsdaten der Quellenvorrichtung des Benutzers gilt.

3. Verwaltungsverfahren nach Anspruch 2, ferner beinhaltend:
- Aktivieren einer Timeout-Periode, die einen Wert aufweist, der gleich der Gültigkeitsdauer ist,
- Speichern, im Speicher, der Positionsdaten der Quellenvorrichtung des Benutzers während der Timeout-Periode,
- Löschen der gespeicherten Positionsdaten nach Ablauf der Timeout-Periode.

4. Server zur Verwaltung des Teilens von Positionsdaten zwischen einer Quellenvorrichtung eines Benutzers und einer Zielvorrichtung eines Dritten, beinhaltend einen Prozessor, der mit einem Speicher betriebsfähig gekoppelt ist und dazu konfiguriert ist, ein Verfahren zur Verwaltung des Teilens von Daten nach einem der Ansprüche 1 bis 3 umzusetzen.

5. Verfahren für den Zugriff auf Positionsdaten einer Quellenvorrichtung eines Benutzers, wobei das Verfahren in einer Zielvorrichtung eines Dritten umgesetzt wird, wobei das Verfahren die folgenden Schritte beinhaltet:
- Empfangen (121), von der Quellenvorrichtung des Benutzers, einer Kennung der Quellenvorrichtung des Benutzers, als zweite Kennung der Quellenvorrichtung des Benutzers bezeichnet, und einer Zugriffsinformationsnachricht, die die Zielvorrichtung des Dritten darüber informiert, ob sie autorisiert ist, Positionsdaten der Quellenvorrichtung des Benutzers zu erhalten,
- Erstellen, durch einen Benutzer einer Companion-App, die für das Teilen von Positionsdaten zuständig ist und durch die Zielvorrichtung des Dritten ausgeführt wird, eines Benutzerskontos bei einem von der Quellenvorrichtung entfernten Server,
- Übertragen, an den entfernten Server, durch die Companion-App, während der Erstellung des Benutzerkontos, einer Kennung der Zielvorrichtung des Dritten, als zweite Kennung der Zielvorrichtung des Dritten bezeichnet,
- Empfangen, als Reaktion auf die Übertragung der zweiten Kennung der Zielvorrichtung des Dritten, von dem entfernten Server, einer Nachricht, die einen Authentifizierungscode beinhaltet,
- Eingeben, durch den Benutzer der Zielvorrichtung des Dritten, des Authentifizierungscodes in die Companion-App,
- Übertragen (122), an den entfernten Server, einer Anforderung zur Übertragung von Positionsdaten der Quellenvorrichtung des Benutzers, wobei die Anforderung die zweite Kennung der Quellenvorrichtung des Benutzers beinhaltet und unter Verwendung eines Tokens übertragen wird, der die zweite Kennung der Zielvorrichtung des Dritten und den Authentifizierungscode beinhaltet, und
- Empfangen (123), als Reaktion auf die Anforderung zur Übertragung von Positionsdaten der Quellenvorrichtung des Benutzers, von Positionsdaten der Quellenvorrichtung des Benutzers.

6. Zielvorrichtung eines Dritten, die dazu konfiguriert ist, auf Positionsdaten einer Quellenvorrichtung eines Benutzers zuzugreifen, beinhaltend einen Prozessor, der mit einem Speicher betriebsfähig gekoppelt ist und dazu konfiguriert ist, das Verfahren für den Zugriff auf Positionsdaten einer Quellenvorrichtung des Benutzers nach Anspruch 5 umzusetzen.

7. Verfahren, das die Schritte des Verfahrens zur Verwaltung des Teilens von Positionsdaten nach einem der Ansprüche 1 bis 3 beinhaltet, wobei das Verfahren ferner die Schritte des Verfahrens für den Zugriff auf Positionsdaten der Quellenvorrichtung des Benutzers (11) nach Anspruch 5 beinhaltet, wobei das Verfahren ferner die folgenden Schritte beinhaltet, die in der Quellenvorrichtung des Benutzers umgesetzt werden:
- Auswählen (111) der ersten Kennung der Zielvorrichtung des Dritten aus einem Satz Kennungen von Zielvorrichtungen mindestens eines Dritten, die in der Quellenvorrichtung des Benutzers gespeichert sind,
- Übertragen (112), an den entfernten Server, der ersten Kennung der Quellenvorrichtung des Benutzers, der ersten Kennung der Zielvorrichtung des Dritten und der Autorisierungsnachricht, die angibt, ob die Zielvorrichtung des Dritten autorisiert ist, Positionsdaten der Quellenvorrichtung des Benutzers zu erhalten,
- Übertragen (113), an die Zielvorrichtung des Dritten, der zweiten Kennung der Quellenvorrichtung des Benutzers, die der ersten Kennung der Quellenvorrichtung des Benutzers entspricht, und der Zugriffsinformationsnachricht, die sie darüber informiert, ob sie autorisiert ist, Positionsdaten der Quellenvorrichtung des Benutzers zu erhalten, und
- Übertragen (114), an den entfernten Server, der Positionsdaten der Quellenvorrichtung des Benutzers.

8. System, das eine Quellenvorrichtung eines Benutzers, eine Zielvorrichtung eines Dritten und einen entfernten Server umfasst, wobei das System dazu konfiguriert ist, das Verfahren nach Anspruch 7 umzusetzen.

9. System nach Anspruch 8, wobei die Quellenvorrichtung eine Uhr ist, die ferner Folgendes beinhaltet:
- ein Geolokalisierungsmodul,
- ein Kommunikationsmodul.

10. Computerprogramm, das Anweisungen beinhaltet, die, wenn das Programm von einem Prozessor ausgeführt wird, den Prozessor dazu veranlassen, das Verfahren nach einem der Ansprüche 1 bis 3 oder nach Anspruch 5 umzusetzen.

11. Computerlesbares nichttransitorisches Aufzeichnungsmedium, auf dem das Computerprogramm nach Anspruch 10 aufgezeichnet ist.

## Claims

1. Method for managing sharing of location data between a source device (11) of a user and a destination device (12) of a third party, said method being implemented by a server which is remote from said source device (11) of a user and from said destination device (12) of a third party, said method comprising the following steps:
- receiving (131), from the source device of the user, a first identifier of the source device of the user, a first identifier of the destination device of the third party, and an authorization message indicating whether the destination device of the third party is authorized to obtain location data from the source device of the user,
- constructing or updating (132) a lookup table associating the first identifier of the source device of the user with the first identifier of the destination device of the third party,
- receiving (135) location data from the source device of the user,
- receiving, from a companion application dedicated to sharing location data and executed by said destination device (12) of the third party, an identifier of the destination device of the third party, referred to as the second identifier of said destination device of the third party, said second identifier of said destination device of the third party being received during the creation of a user account with said server by a user of the companion application,
- transmitting, in response to said receiving of said second identifier of the destination device of the third party, a message to said destination device of the third party, said message comprising an authentication code,
- receiving (133), from the destination device of the third party, a request to transmit location data from the source device of the user, the receiving of the request using a token comprising the second identifier of the destination device of the third party and said authentication code, said request further comprising a second identifier of the source device of the user corresponding to the first identifier of the source device of the user,
- verifying, using the authentication code, that said user of said destination device of the third party is authorized,
- determining (134), using the second identifier of the source device of the user and the lookup table, whether the first identifier and second identifier of the destination device of the third party match, and
- transmitting (136), to the destination device of the third party, the location data from the source device of the user, in response to the request, when the first identifier and second identifier of the destination device of the third party match.

2. Management method according to Claim 1, also comprising receiving a validity period which is applicable to the location data from the source device of the user.

3. Management method according to Claim 2, further comprising:
- activating a timeout having a value which is equal to the validity period,
- storing the location data from the source device of the user in memory during the timeout,
- deleting the stored location data after the timeout has expired.

4. Server for managing sharing of location data between a source device of a user and a destination device of a third party, comprising a processor operationally coupled to a memory, and configured to implement a data sharing management method according to any one of Claims 1 to 3.

5. Method for accessing location data from a source device of a user, said method being implemented in a destination device of a third party, said method comprising the following steps:
- receiving (121), from the source device of the user, an identifier of the source device of the user, referred to as the second identifier of the source device of the user, and an access information message informing the destination device of the third party whether it is authorized to obtain location data from the source device of the user,
- a user of a companion application dedicated to sharing location data and executed by said destination device of the third party creating a user account with a server which is remote from said source device,
- the companion application transmitting, to said remote server, during said creation of the user account, an identifier of the destination device of the third party, referred to as the second identifier of the destination device of the third party,
- receiving, in response to said transmission of said second identifier of the destination device of the third party, from said remote server, a message comprising an authentication code,
- the user of the destination device of the third party entering said authentication code into said companion application,
- transmitting (122), to said remote server, a request to transmit location data from the source device of the user, the request comprising the second identifier of the source device of the user and being transmitted using a token comprising said second identifier of the destination device of the third party and said authentication code, and
- receiving (123), in response to the request to transmit location data from the source device of the user, location data from the source device of the user.

6. Destination device of a third party configured to access location data from a source device of a user, comprising a processor operationally coupled to a memory, and configured to implement the method for accessing location data from a source device of the user according to Claim 5.

7. Method comprising the steps of the method for managing sharing of location data according to one of Claims 1 to 3, said method further comprising the steps of the method for accessing location data from the source device of the user (11) according to Claim 5, the method further comprising the following steps implemented in the source device of the user:
- selecting (111) the first identifier of the destination device of the third party, from a set of identifiers of destination devices of at least one third party which are stored in the source device of the user,
- transmitting (112), to the remote server, the first identifier of the source device of the user, the first identifier of the destination device of the third party and the authorization message indicating whether the destination device of the third party is authorized to obtain location data from the source device of the user,
- transmitting (113), to the destination device of the third party, the second identifier of the source device of the user matching the first identifier of the source device of the user, and the access information message informing it whether it is authorized to obtain location data from the source device of the user, and
- transmitting (114) the location data from the source device of the user to the remote server.

8. System comprising a source device of a user, a destination device of a third party and a remote server, said system being configured to implement the method according to Claim 7.

9. System according to Claim 8, according to which the source device is a watch, further comprising:
- a geolocation module,
- a communication module.

10. Computer program comprising instructions which, when the program is executed by a processor, lead said processor to implement the method according to any one of Claims 1 to 3 or Claim 5.

11. Computer-readable non-transitory storage medium on which the computer program according to Claim 10 is stored.
